# EUROPÄISCHE PATENTSCHRIFT

(11) **EP 3 197 733 B1**
(45) Veröffentlichungstag und Bekanntmachung des Hinweises auf die Patenterteilung: **07.11.2018**
(21) Anmeldenummer: 15775395.5
(22) Anmeldetag: 18.09.2015
(51) Int. Cl.: B60T 7/04

(54) **VERFAHREN, PARKBREMSSYSTEM UND FAHRZEUG ZUR PARKBREMSKRAFTERZEUGUNG**
METHOD, PARKING BRAKE SYSTEM, AND VEHICLE FOR GENERATING A PARKING BRAKE FORCE
PROCÉDÉ, SYSTÈME DE FREINS DE STATIONNEMENT, ET VÉHICULE PERMETTANT DE PRODUIRE UNE FORCE DE FREINAGE DE STATIONNEMENT

(30) Priorität: 22.09.2014 DE 102014013744
(43) Veröffentlichungstag der Anmeldung: 02.08.2017
(73) Patentinhaber: KNORR-BREMSE Systeme für Nutzfahrzeuge GmbH, 80809 München (DE)
(72) Erfinder: BALOGH, Levente, H-6000 Kecskemét (HU)
(74) Vertreter: Kietzmann, Lutz
(86) Internationale Anmeldenummer: PCT/EP2015/071390
(87) Internationale Veröffentlichungsnummer: WO 2016/046067

(56) Entgegenhaltungen:
- EP-A2- 1 509 434
- EP-B1- 2 238 004
- WO-A1-2011/039556
- US-A- 5 922 038
- US-A1- 2011 168 518
- US-B2- 8 512 208

## Beschreibung

Die vorliegende Erfindung betrifft ein Verfahren zum Betrieb eines Parkbremssystems eines Fahrzeugs, umfassend Verfahrensschritte, bei denen durch eine elektronische Steuereinheit der Schaltzustand eines monostabilen, in mindestens zwei mögliche Schaltzustände schaltbaren, Parkbremsenbetätigungselementes (PBB) registriert wird, und die Geschwindigkeit des Fahrzeugs durch die Steuereinheit registriert wird, und die durch die Parkbremsen des Parkbremssystems erzeugte aktuelle Ist-Parkbremskraft registriert wird, wobei eine Ist-Parkbremskraft von 0 Newton gelösten Parkbremsen und eine maximale Ist-Parkbremskraft angelegten Parkbremsen entspricht, und in Abhängigkeit der Geschwindigkeit, der Ist-Parkbremskraft und des Schaltzustandes des PBB eine Soll-Parkbremskraft festgelegt und zur Erzeugung durch die Parkbremsen eingesteuert wird.

Darüber hinaus betrifft die Erfindung auch ein Parkbremssystem und Fahrzeug mit einem solchen Parkbremssystem, zur Durchführung eines solchen Verfahrens.

Das Einsatzgebiet der Erfindung erstreckt sich auf Fahrzeuge, vorzugsweise Kraftfahrzeuge wie Lastkraftwagen (LKW), die über Parkbremsen verfügen. Ein typisches Parkbremssystem eines LKWs kann, je nach Technologie beziehungsweise Hersteller, eine Parkbremse in Form einer Feststellbremse, beispielsweise einer Federspeicher-Feststellbremse, für den motorisierten Teil des LKW und eine weitere Parkbremse in Form einer Betriebsbremse für den Anhänger aufweisen. Eine Feststellbremse funktioniert dabei gegenüber einer Betriebsbremse invers, das heißt, dass beispielsweise bei pneumatisch betätigten Feststellbremsen ein hoher Druck in eine geringe Parkbremskraft erzeugt und ein niedriger Druck eine hohe Parkbremskraft erzeugt. Somit ist gewährleistet, dass im Falle eines Defekts die Parkbremse angelegt ist. Die Betriebsbremse des Anhängers kann dabei sowohl Teil des Betriebsbremssystems als auch des Parkbremssystems des Fahrzeugs sein, wobei dann die beispielsweise pneumatische Betriebsbremse Luftdruck, der von dem Parkbremssystem und unabhängig davon durch Luftdruck, der vom Betriebsbremssystem eingesteuert wurde, angelegt wird.

Im allgemein bekannten Stand der Technik sind elektrisch betätigbare Parkbremssysteme vorgesehen, die ein monostabiles Parkbremsbetätigungselement (PBB) wie einen Druckknopf umfassen, der zwischen mindestens zwei diskreten Schaltzuständen umschalten kann. Steht das Fahrzeug, und sind die Parkbremsen gelöst, so bewirkt das Drücken und Loslassen des PBB beispielsweise, dass die Parkbremsen angelegt werden. Dabei bedeutet ein Anlegen der Parkbremsen, dass diese mit der ihnen maximal zu Verfügung stehenden Kraft angelegt werden, also beispielsweise die Feststellbremsen ohne der Bremskraft entgegenwirkenden Luftdruck und gegebenenfalls die Betriebsbremsen mit maximaler Luftdruckbeaufschlagung. Ein Nachteil ist darin zu sehen, dass diese Methode des Anlegens und Lösens unsicher ist, da das einfache Drücken des PBB auch unabsichtlich geschehen kann.

Ferner sind Zwischenzustände zwischen gelösten Parkbremsen mit einer Kraft von 0 Newton und angelegten Parkbremsen mit einer maximalen Kraft sind durch den Fahrer gewöhnlich nicht ansteuerbar. Dies ist nachteilhaft, da eine durch den Fahrer gesteuerte Parkbremsenregelung mit solchen ansteuerbaren Zwischenzuständen wünschenswert sein kann, beispielsweise um beim Abbremsen des fahrenden Fahrzeugs das Parkbremssystem zusätzlich zum Betriebsbremssystem einzusetzen, um die insgesamt wirkende Bremskraft zu verstärken.

Aus der WO 2011/039556 A1 geht eine Parkbremssystem hervor, in dem ein mehrstufiges Betätigungselement vorgesehen ist, über das ein Fahrer durch feinstufige räumliche Verstellung eine entsprechend feinstufig unterteilte Parkbremskraft einsteuern kann. Nachteilhaft hieran ist zum einen die ungewohnte Handhabung durch den Fahrer und die zusätzliche komplexe Sensorik, um den räumlichen Zustand des Betätigungselements zu erfassen.

Aus der EP 1 509 434 B1 geht ein elektronisch gesteuertes Feststellbremssystem hervor, welches über einen relativ komplexes Betätigungselement verfügt, um beispielsweise einen Test der Bremsen durchführen zu können.

Es ist die Aufgabe der vorliegenden Erfindung, ein Verfahren zu schaffen, um das Einsteuern einer feinstufig unterteilten Parkbremskraft durch den Fahrer zu ermöglichen, und um das Anlegen und Lösen und das Testen der Parkbremsen einfach zu gestalten.

Die Aufgabe wird ausgehend von einem Verfahren gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder. Ein die Erfindung betreffendes Parkbremssystem und ein entsprechendes Fahrzeug wird in Ansprüchen 14 und 18 vorgestellt.

Die Erfindung schließt die technische Lehre ein, dass durch die Steuereinheit der skalare Auslenkungszustand eines monostabilen, in ein kontinuierliches Spektrum möglicher skalarer Auslenkungszustände auslenkbaren, Betriebsbremsenbetätigungselements (BBB) registriert wird, und der Auslenkungszustand des BBB bei der Festlegung der Soll-Parkbremskraft berücksichtigt wird.

Das BBB kann beispielsweise das Bremspedal sein, mit dem die Betriebsbremse des Fahrzeugs durch den Fahrer betätigbar ist. Durch die kombinierte, gleichzeitige Betätigung des PBB und des BBB eröffnen sich durch die somit geschaffene neue zweidimensionale Betätigungseinheit eine Vielzahl neuer Betätigungsmöglichkeiten für den Fahrer, insbesondere ohne notwendige Installation neuer Hardware. Insbesondere die graduelle, stufenlose oder feinstufige Anordnung von Auslenkungszuständen des BBB bietet Möglichkeiten, die durch den abgestuften PBB nicht gegeben sind.

Gemäß einer bevorzugten Variante des Verfahrens wird die Soll-Parkbremskraft durch die Steuereinheit auf deren maximalen Wert festgelegt, werden also die Parkbremsen angelegt, wenn durch die Steuereinheit die Geschwindigkeit innerhalb eines Stillstandsintervalls und eine Ist-Parkbremskraft von 0 Newton, also gelöste Parkbremsen, und ein instabiler Auslenkungszustand des BBB registriert wird, also wenn beispielsweise das Bremspedal gedrückt ist, und währenddessen eine Umschaltung des PBB in einen instabilen Schaltzustand und anschließend eine Umschaltung des PBB in dessen monostabilen Schaltzustand registriert wird. Die Parkbremsen werden diesem Verfahren gemäß also angelegt, wenn das Fahrzeug still steht und der Fahrer gleichzeitig beispielsweise das Bremspedal des Betriebsbremssystems drückt und währenddessen beispielsweise den monostabilen Druckknopf des Parkbremssystems auslenkt und loslässt. Dabei kann eine minimale Schaltdauer des Umschaltens abgewartet werden, um ein versehentliches Auslösen der Parkbremsen zusätzlich zu vermeiden und beispielsweise Kontaktprellen zu ignorieren.

Der Vorteil dieses Verfahrens kann unter anderem darin gesehen werden, dass durch das notwendige Auslenken des BBB eine dem Fahrer vertraute Betätigung zum Anlegen der Parkbremsen zusätzlich zum Drücken des PBB erfordert wird. Dadurch kann die minimale Umschaltdauer des PBB gegenüber einem Verfahren ohne Zusammenarbeit mit dem BBB verkürzt werden, da ein versehentliches Auslösen von sowohl BBB als auch PBB sehr viel unwahrscheinlicher ist als nur eines von beiden. Die Überwachung der Fahrzeuggeschwindigkeit verringert weiter das Risiko, dass die Parkbremsen unbeabsichtigt angelegt werden.

Eine weitere bevorzugte Ausführungsform des Verfahrens sieht vor, dass die Parkbremsen gelöst werden sollen, wenn die Ist-Parkbremskraft oberhalb eines oberen Parkkraftschwellwertes registriert werden, diese also angelegt sind, das BBB ausgelenkt wird, und währenddessen das PBB ausgelenkt und losgelassen wird.

Dieses Verfahren wirkt also komplementär zu dem erfindungsgemäßen Verfahren zum Anlegen der Parkbremsen. Der Vorteil dieses Verfahrens ist also ähnlich zu sehen, wobei die Geschwindigkeit nicht notwendigerweise überprüft werden muss, da die Parkbremsen mit ihrer maximalen Kraft angelegt sind. Dennoch kann diese Kondition in dem durch die Steuereinheit durchgeführten Algorithmus berücksichtigt werden.

Eine weitere Ausführungsform des Verfahrens sieht vor, dass die Parkbremsen gelöst werden sollen, das BBB zwar nicht ausgelenkt ist, dafür aber beispielsweise ein Getriebebetätigungselement, wie ein Schalthebel der Gangschaltung, außerhalb von dessen Leerlauf- oder Parkstellung registriert wird oder ein Beschleunigungsbetätigungselements, wie ein Gaspedal, als ausgelenkt registriert wird, und währenddessen der PBB ausgelenkt und wieder losgelassen wird.

Der Vorteil dieses Verfahrens kann beispielsweise darin zu sehen sein, dass die Stellung des Schalthebels oder des Gaspedals Indikator dafür gewertet wird, dass der Fahrer beabsichtigt, das Fahrzeug in Bewegung zu setzen. Dadurch wird das Lösen der Parkbremsen für den Fahrer einfacher und intuitiver durchführbar.

Eine zusätzliche sehr bevorzugte Ausführungsform der Erfindung sieht vor, dass die Soll-Parkbremskraft durch die Steuereinheit durch eine monotone Funktion des skalaren Auslenkungszustandes des BBB errechnet wird, während ein instabiler Schaltzustand des PBB registriert wird. Jedem Auslenkungszustand des BBB kann ein skalarer Wert zugeordnet werden, vorzugsweise 0 für den monostabilen Auslenkungszustand und streng monoton steigende Werte für steigende Auslenkungszustände. Dann führt eine erfindungsgemäße monoton steigende Funktion dazu, dass sich die physikalische Parkbremskraft, die durch die Parkbremsen des Parkbremssystems erwirkt wird, durch den Fahrer insbesondere während der Fahrt kontinuierlich und gezielt, ebenso wie die Bremskraft der Betriebsbremsen, kontrollieren lässt. Der gleiche Effekt lässt sich beispielsweise bei negativen skalaren Werten des BBB und einer monoton fallenden Funktion erreichen. Dieses Verfahren kann auch dadurch eingegrenzt werden, dass es nur während der Fahrt durchgeführt wird, da eine graduelle Anpassung der Parkbremskraft im Stillstand nicht notwendigerweise vorteilhaft sein muss.

Der Vorteil dieses Verfahrens umfasst beispielsweise, dass der Fahrer in der Lage ist, durch eine ebenso feinstufige Kontrolle der Parkbremsen wie der Betriebsbremsen einen Bremsvorgang zu unterstützen um beispielsweise schneller, aber kontrolliert, abzubremsen. Dabei wird also für den Fahrer die beispielsweise binäre Funktion des PBB, der weiterhin wie gewohnt und einfach zu bedienen ist, um die komplexere, kontinuierliche Funktion des BBB erweitert.

Diese feinstufige Kontrolle der Parkbremskraft ist vor allem während der Fahrt vorteilhaft, kann aber erfindungsgemäß auch im Stillstand genutzt werden.

Vorzugsweise wird dabei die Soll-Parkbremskraft durch die Steuereinheit durch eine lineare Funktion des skalaren Auslenkungszustandes des BBB errechnet.

Der Vorteil dieser speziellen Funktionsform ist darin zu sehen, dass der Fahrer somit parallel gleichermaßen die Betriebsbremskraft und die Parkbremskraft definieren kann, während er das BBB und das PBB auslenkt. Auch andere Funktionsformen sind allerdings denkbar, statt mit konstanter Steigung beispielsweise mit ansteigender Steigung oder mit fallender Steigung, um die Kontrolle der Parkbremskraft gegebenenfalls intuitiver zu gestalten. So würde eine Funktion mit steigender Steigung dazu führen, dass bei geringer Auslenkung des BBB anteilsmäßig weniger Parkbremskraft eingesteuert wird als bei hoher Auslenkung des BBB.

Eine Verbesserung dieses Verfahrens sieht vor, dass die Soll-Parkbremskraft durch die Steuereinheit auf 0 Newton festgelegt wird, wenn eine Geschwindigkeit außerhalb eines Stillstandintervalls registriert wird und ein instabiler Auslenkungszustand des BBB registriert wird und währenddessen ein Umschalten des PBB von einem instabilen Schaltzustand in den monostabilen Schaltzustand registriert wird.

Der Vorteil dieser Erweiterung des Verfahrens kann darin gesehen werden, dass bei Loslassen des PBB, wodurch dieser wieder in dessen monostabilem Schaltzustand registriert werden wird, die Parkbremsen, insbesondere während der Fahrt, wieder gelöst werden, und bei weiterer Betätigung des BBB nur die Betriebsbremsen zur Bremsung eingesetzt werden.

Eine weitere Ausführungsform des Verfahrens sieht vor, dass die Soll-Parkbremskraft durch die Steuereinheit auf deren maximalen Wert festgelegt wird, wenn durch die Steuereinheit die Geschwindigkeit innerhalb eines Stillstandsintervalls und die Ist-Parkbremskraft von 0 Newton registriert wird und der Auslenkungszustand des BBB fehlerhaft registriert wird, und währenddessen über eine festgelegte Rückfalldauer hinweg ein instabiler Schaltzustand des PBB registriert wird.

Der Vorteil dieses Verfahrens ist darin zu sehen, dass im Falle eines Fehlers bei der Erfassung des Zustands des BBB die Parkbremsen dennoch wie gewohnt eingelegt werden können, indem der PBB über längere Zeit betätigt wird.

Eine bevorzugte Ausführungsform des Verfahrens sieht vor, dass zur Einsteuerung der Soll-Parkbremskraft eine Feststellbremse des Fahrzeugs angesteuert wird. Vorzugsweise handelt es sich dabei um eine Federspeicher-Feststellbremse. Eine solche Bremse funktioniert auch bei einem Druckabfall und über beliebig lange Zeiten hinweg.

Eine ebenfalls bevorzugte Ausführungsform sieht vor, dass zur Einsteuerung der Soll-Parkbremskraft eine Betriebsbremse eines Anhängers des Fahrzeugs angesteuert wird.

Der Vorteil ist hier darin zu sehen, dass manche Bremssysteme herstellerabhängig so ausgelegt sind, dass im motorisierten Fahrzeug eine Feststellbremse und im Anhänger eine Betriebsbremse als Parkbremsen wirken. Diese Bremsen können dann direkt für das erfindungsgemäße Verfahren genutzt werden.

Ein diesbezügliches bevorzugtes Verfahren sieht vor, dass ein Bremstest durchgeführt wird, indem, wenn durch die Steuereinheit die Geschwindigkeit innerhalb eines Stillstandsintervalls und der monostabile Auslenkungszustand des BBB und die Ist-Parkbremskraft oberhalb eines oberen Parkkraftschwellwertes und eine Umschaltung des PBB in einen instabilen Schaltzustand registriert wird, die Betriebsbremse des Anhängers zur Erzeugung einer Parkbremskraft von 0 Newton angesteuert wird, und anschließend entweder nach Ablauf einer festgelegten Testdauer oder vorher nach Umschaltung des PBB in dessen monostabilen Schaltzustand die Betriebsbremse des Anhängers mit deren maximaler Soll-Parkbremskraft angesteuert wird.

Eine solche Testfunktion kann gesetzlich vorgeschrieben sein und ermöglicht dem Fahrer, die Funktionstüchtigkeit des Parkbremssystems und / oder des Betriebsbremssystems zu überprüfen.

Eine vorteilhafte Weiterbildung des Verfahrens besteht darin, dass Steuereinheit aus einem Bereitschaftsmodus in einen Betriebsmodus gewechselt wird, wenn ein Umschalten von dem monostabilen Schaltzustand in einen instabilen Schaltzustand des PBB registriert wird.

Dies ist vor allem vorteilhaft, da die Steuereinheit eine Parkbremssystems üblicherweise nach Ablauf einer festgelegten Zeit ohne Aktivität in einen Bereitschafts- oder Standby-Modus wechselt, unter anderem damit nicht über lange Zeiträume hinweg unnötig die Energie der Autobatterie verschwendet wird, und da sich eine Betätigung des PBB zum Erwecken aus diesem Modus eignet.

Eine bevorzugte Ausführungsform sieht vor, dass der Auslenkungszustand des BBB durch eine Positionssensorik am BBB oder durch eine Drucksensorik in einem Druckreservoir des Betriebsbremssystems ermittelt wird.

Vorteilhaft hieran ist, dass im Falle des Positionssensorik der Auslenkungszustand besonders genau und unverzüglich erfasst werden kann, während die Messung des Druckes, über den auf den Auslenkungszustand des BBB geschlossen werden kann, technisch einfacher durchführbar sein kann.

Die Erfindung betrifft auch ein zugehöriges Parkbremssystem mit den bekannten Komponenten.

Vorzugsweise existiert genau ein instabiler Schaltzustand des PBB, bei dem zwei im monostabilen Schaltzustand elektrisch verbundene Kontakte elektrisch getrennt sind, und bei dem die Kontakte direkt oder über ein Steuergerät und einen Datenbus mit der Steuereinheit verbunden sind. Der Vorteil dieser Ausführungsform besteht vor allem in der sehr simplen Bauform des PBB. Dadurch, dass die Funktionalität zur Bedienung der Parkbremsen auch auf das BBB Rücksicht nimmt, ist ein komplexes PBB nicht notwendig.

Eine Verbesserung dieses Parkbremssystems sieht vor, dass das BBB über einen Positionssensor verfügt welcher direkt oder über ein Steuergerät und einen Datenbus mit der Steuereinheit verbunden ist.

Der Vorteil dieser Aufführungsform ist im Falle der direkten Verbindung darin zu sehen, dass der Aufbau der Sensorik stark vereinfacht ist, während die Einbindung eines dem BBB zugehörigen Steuergerätes vorteilhaften Gebrauch von einem im Fahrzeug enthaltenen Datenbus macht.

Ebenfalls bevorzugt ist eine Ausführungsform, bei ein optisches Anzeigeelement auf dem BPP vorgesehen ist, zur Anzeige der Ist-Parkbremskraft.

Der Vorteil ist darin zu sehen, dass der Fahrer somit durch einen Blick auf das PBB, das intuitiv mit der Parkbremse assoziiert wird, über deren Stellung informiert wird, so dass er einschätzen kann ob ein Lösen oder Anlegen der Parkbremse erforderlich ist.

Die Erfindung betrifft ebenfalls ein Fahrzeug, vorzugsweise einen Lastkraftwagen mit Anhänger, mit einem solchen Parkbremssystem.

Im Falle eines Lastkraftwagens sieht eine bevorzugte Ausführungsform der Erfindung vor, dass ein Anhänger eine Parkbremse besitzt, welche Teil des Parkbremssystems ist, und die als Betriebsbremse ausgeführt ist, die also beispielsweise bei hohem Druck eine hohe Parkbremskraft und bei geringem Druck eine geringe Parkbremskraft ausübt. Dabei ist es auch möglich, dass die Betriebsbremse sowohl durch das Betriebsbremssystem als auch durch das Parkbremssystem angesteuert werden kann. Ein Teil der Bremskraft, die durch die entsprechenden Bremsen erwirkt wird, ist dann als Parkbremskraft und ein anderer Teil als Betriebsbremskraft einzuordnen. Beispielsweise kann der Luftdruck, der die Betriebsbremse mit Kraft beaufschlägt, teilweise durch das Betriebsbremssystem und zu einem anderen Teil aus dem Parkbremssystem eingesteuert werden.

Weitere die Erfindung verbessernde Maßnahmen werden nachstehend gemeinsam mit der Beschreibung eines bevorzugten Ausführungsbeispiels der Erfindung anhand der Figuren dargestellt.

Es zeigen:
Figur 1 eine schematische Darstellung eines erfindungsgemäßen Fahrzeugs mit Anhänger,
Figur 2 Graphen des erfindungsgemäßen Verfahrens, die Parkbremsen anzulegen,
Figur 3 Graphen des erfindungsgemäßen Verfahrens, die Parkbremsen zu lösen,
Figur 4 Graphen des erfindungsgemäßen Verfahrens, die Parkbremsen zu testen, und
Figur 5 Graphen des erfindungsgemäßen Verfahrens, das Fahrzeug durch stufenlos eingesteuerte Parkbremskraft abzubremsen.

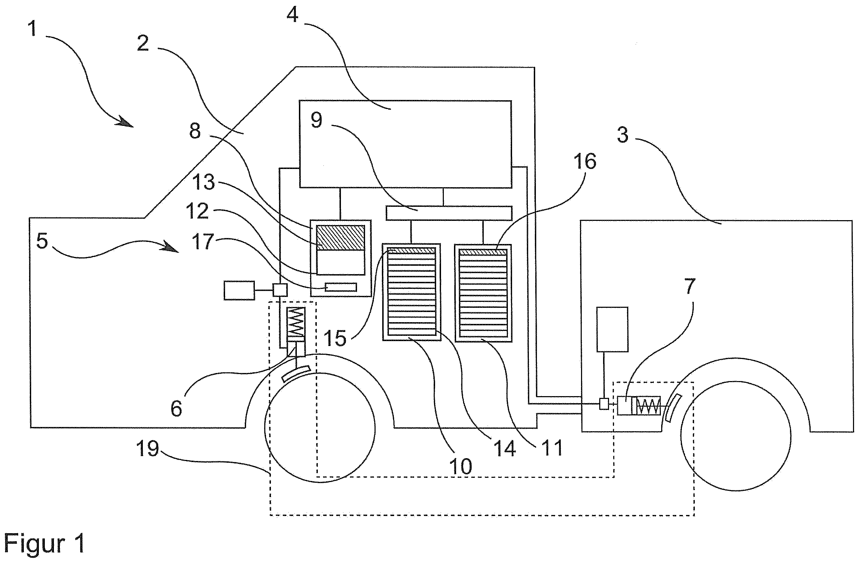

Gemäß Figur 1 umfasst ein Fahrzeug 1 eine motorisierte Zugmaschine 2 und einen angekoppelten Anhänger 3. Eine elektronische Steuereinheit 4 steuert ein Parkbremssystem 5, welche eine Feststellbremse 6 der Zugmaschine und eine Betriebsbremse 7 des Anhängers umfasst.

Die Steuereinheit 4 ist ferner direkt mit einem Parkbremsenbetätigungselement 8 (PBB) zur Einwirkung des Fahrers auf das Parkbremssystem 5 verbunden. Über einen Datenbus 9 in Form eines CAN-Busses besteht außerdem eine Verbindung zu einem Betriebsbremsenbetätigungselement 10 (BBB) in Form eines Bremspedals zur Betätigung der nicht weiter dargestellten Betriebsbremsen und zu einem Beschleunigungsbetätigungselement 11 in Form eines Gaspedals.

Das PBB 8 verfügt über zwei mögliche Schaltzustände 12, darunter ein monostabiler Schaltzustand 13. Das BBB 10 verfügt über ein Spektrum sehr fein abgestufter möglicher Auslenkungszustände 14, darunter ein monostabiler Auslenkungszustand 15. Die Bewegung des BBB, also des Bremspedals, ist selbst rein physikalisch komplett stufenlos, allerdings bewirkt ein hier nicht weiter dargestellter A/D-Wandler, dass die elektronische Steuereinheit 4 einen digitalen, wie grafisch angedeutet abgestuften skalaren Auslenkungszustand registriert. Das Beschleunigungsbetätigungselement 11 verfügt ebenso wie das BBB 10 über einen monostabilen Auslenkungszustand 16. Außerdem weist das PBB 8 ein optisches Anzeigeelement 17 zur Anzeige der Ist-Parkbremskraft 20 auf. Darüber kann der Fahrer zum Beispiel erkennen, ob die Parkbremsen 19, bestehend aus Feststellbremse 6 der Zugmaschine 2 und Betriebsbremse 7 des Anhängers 3, angelegt oder gelöst sind.

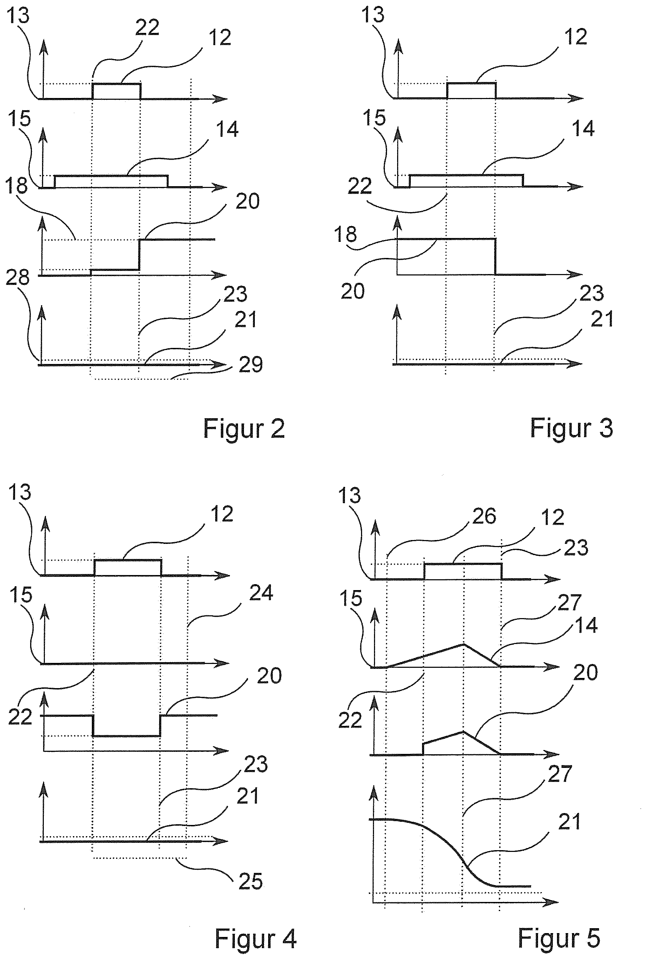

Je nach gleichzeitiger Betätigung von PBB 8 und BBB 10 können durch den Fahrer aufgrund der in der Recheneinheit hinterlegten, hier nicht dargestellten, Rechenanweisungen zur Durchführung des erfindungsgemäßen Verfahrens nun verschiedene Funktionen des Parkbremssystems 5 durchgeführt werden, einschließlich das Lösen, Anlegen, Testen und Bremsen mithilfe der Parkbremsen 19 (siehe Figuren 2 bis 5).

In Figur 2 ist in einem ersten Graphen der Schaltzustand 12 des PBB 8, in einem zweiten Graphen der Auslenkungszustand 14 des BBB 10, in einem dritten Graphen die Parkbremskraft 20, die durch die Parkbremsen 19 erzeugt wird, und in einem vierten Graphen die Geschwindigkeit 21 des Fahrzeugs dargestellt. Alle Graphen zeigen dabei einen durch eine gestrichelte Linie dargestellten PBB-Betätigungszeitpunkt 22, zu dem das PBB von seinem monostabilen Schaltzustand 13 in einen instabilen Schaltzustand 12 umgeschaltet wird, und einen PBB-Loslasszeitpunkt 23, zu dem das PBB wieder in seinen monostabilen Schaltzustand 13 übergeht.

Das Fahrzeug steht still, erkennbar an der Geschwindigkeit 21 innerhalb des Stillstandsintervalls 28. Die Ist-Parkbremskraft 20 liegt zu Beginn bei 0 Newton, die Parkbremsen 19 sind also gelöst. Zu einem nicht definierten Zeitpunkt tritt der Fahrer auf das Bremspedal, befördert also das BBB 10 (zweiter Graph) aus dessen monostabilen Auslenkungszustand 15 in einen instabilen Auslenkungszustand 14. Zum PBB-Betätigungszeitpunkt 22 steigt die Parkbremskraft 20 erfindungsgemäß auf einen Zwischenwert an, der abhängig ist von dem Auslenkungszustand 14 des BBB 10. Diese Funktionalität ist im Stillstand, erkennbar an der Geschwindigkeit 21 auf der Nulllinie, nicht wesentlich, kann aber wünschenswert sein. Nachdem nun das PBB 8 wieder losgelassen wird, also in dessen monostabilen Schaltzustand 13 übergeht, wird erfindungsgemäß die Parkbremskraft 20 auf ihren maximalen Wert 18 heraufgesetzt, es werden also die Parkbremsen 19 angelegt. Dieser Zustand ist stabil, es ändert sich nichts wenn das BBB 10 ebenfalls wieder losgelassen und somit in dessen monostabilen Auslenkungszustand 15 überführt wird.

Falls der Auslenkungszustand 14 des BBB 10 nicht oder nur fehlerhaft gemessen werden kann, so ist es auch möglich, die Parkbremsen 19 anzulegen, indem der PBB 8 über die durch die Steuereinheit festgelegte Rückfalldauer 29 hinweg im instabilen Schaltzustand 12 gehalten wird.

In Figur 3 ist in einem ersten Graphen der Schaltzustand 12 des PBB 8, in einem zweiten Graphen der Auslenkungszustand 14 des BBB 10, in einem dritten Graphen die Parkbremskraft 20 und in einem vierten Graphen die Geschwindigkeit 21 des Fahrzeugs dargestellt. Zu einem PBB-Betätigungszeitpunkt 22 wird das PBB von seinem monostabilen Schaltzustand 13 in einen instabilen Schaltzustand 12 umgeschaltet, und zu einem PBB-Loslasszeitpunkt 23wieder zurück.

Das Fahrzeug steht still, und die Ist-Parkbremskraft 20 liegt zu Beginn bei ihrem maximalen Wert 18, die Parkbremsen 19 sind also angelegt. Zu einem nicht weiter definierten Zeitpunkt tritt der Fahrer auf das Bremspedal, befördert also das BBB 10 (zweiter Graph) aus dessen monostabilen Auslenkungszustand 15 in einen instabilen Auslenkungszustand 14. Zum darauf folgenden PBB-Betätigungszeitpunkt 22 bleibt die Parkbremskraft 20 konstant. Dies spiegelt eine ebenfalls mögliche Ausbildungsform des Verfahrens wieder, wobei die Anpassung der Parkbremskraft 20 an den Auslenkungszustand 14 des BBB 10 nur außerhalb vom Stillstand stattfindet. Nachdem nun das PBB 8 zum PBB-Loslasszeitpunkt 23 wieder losgelassen wird, also in dessen monostabilen Schaltzustand 13 übergeht, wird erfindungsgemäß die Parkbremskraft 20 auf 0 Newton herabgesetzt, es werden also die Parkbremsen 19 gelöst. Dieser Zustand ist stabil, es ändert sich nichts wenn das BBB 10 ebenfalls wieder losgelassen und somit in dessen monostabilen Auslenkungszustand 15 überführt wird.

In Figur 4 ist in einem ersten Graphen der Schaltzustand 12 des PBB 8, in einem zweiten Graphen der Auslenkungszustand 14 des BBB 10 (hier permanent im monostabilen Auslenkungszustand 15), in einem dritten Graphen die Parkbremskraft 20 und in einem vierten Graphen die Geschwindigkeit 21 des Fahrzeugs dargestellt. Zu einem PBB-Betätigungszeitpunkt 22 wird das PBB von seinem monostabilen Schaltzustand 13 in einen instabilen Schaltzustand 12 umgeschaltet, und zu einem PBB-Loslasszeitpunkt 23wieder zurück.

Das Fahrzeug steht still, und die Ist-Parkbremskraft 20 liegt zu Beginn bei ihrem maximalen Wert 18, die Parkbremsen 19 sind also angelegt. Zum Testen der Parkbremsen 19 drückt der Fahrer auf das PBB 8, wodurch, da das BBB 10 nicht gedrückt ist, die Betriebsbremsen 7 des Anhängers 3 gelöst werden. Dementsprechend sinkt die Parkbremskraft 20 für diese Zeitdauer auf einen Zwischenwert, da die Parkbremskraft 20 dann allein durch die Feststellbremsen 6 der Zugmaschine 2 erwirkt wird. Nach dem PBB-Loslasszeitpunkt 23 werden auch die Betriebsbremsen 7 wieder angelegt. Ein Testendzeitpunkt 24 definiert dabei eine Testdauer 25, nach der der Test auch dann beendet worden wäre, also die Parkbremskraft 20 wieder auf ihr Maximum gesetzt worden wäre, wenn der PBB 8 nicht in den monostabilen Schaltzustand 15 zurück geführt worden wäre.

In Figur 5 ist in einem ersten Graphen der Schaltzustand 12 des PBB 8, in einem zweiten Graphen der Auslenkungszustand 14 des BBB 10, in einem dritten Graphen die Parkbremskraft 20 und in einem vierten Graphen die Geschwindigkeit 21 des Fahrzeugs dargestellt, die zu Beginn einer typischen Geschwindigkeit eines fahrenden Fahrzeugs entspricht. Zu einem PBB-Betätigungszeitpunkt 22 wird das PBB von seinem monostabilen Schaltzustand 13 in einen instabilen Schaltzustand 12 umgeschaltet, und zu einem PBB-Loslasszeitpunkt 23wieder zurück.

Zu einem BBB-Betätigungszeitpunkt 26 wird das BBB 10 aus dessen monostabilen Auslenkungszustand 15 ausgelenkt, also das Bremspedal gedrückt, wobei der skalare Auslenkungszustand 14 bis zu einem Maximalzeitpunkt 27 immer weiter zunimmt, und sich von da bis zu einem BBB-Loslasszeitpunkt 27, der hier identisch ist mit dem PBB-Loslasszeitpunkt 23, wieder verringert.

In dem Moment, in dem das PBB 8 betätigt wird, also zu dem PBB-Betätigungszeitpunkt 22, springt die Parkbremskraft von 0 Newton auf einen von dem derzeitigen Auslenkungszustand 14 des BBB 10 abhängigen Wert an. Bis entweder der PBB 8 wieder losgelassen wird, also bis zum PBB-Loslasszeitpunkt 23, oder bis das BBB 10 in Form des Gaspedals wieder frei gelassen wird, also bis zum hier identischen BBB-Loslasszeitpunkt 27, ähnelt die Parkbremskraft 20 dabei dem skalaren Auslenkungszustand 14 des BBB 10, da die Parkbremskraft 20 über eine lineare Funktion in Abhängigkeit des Auslenkungszustandes 14 durch die Recheneinheit 5 festgelegt wird. Die Bremswirkung wird als verstärkt, und der Fahrer kann die Parkbremskraft 20 allein durch Betätigung des diskreten PBB 8 exakt skalieren.

Der Effekt ist in der Geschwindigkeit 21 erkennbar. Zu Beginn, bis zum BBB-Betätigungszeitpunkt 26, bleibt diese konstant, da nicht gebremst wird. Nachdem die hier nicht dargestellte Betriebsbremskraft aufgrund der linear ansteigenden Auslenkung des BBB 10 linear ansteigt, sinkt die Geschwindigkeit parabelförmig ab. Die Rate der negativen Beschleunigung nimmt dabei ab dem PBB-Betätigungszeitpunkt 21 zu, da hier die Parkbremsen 19 mit einer, zur hier nicht dargestellten Betriebsbremskraft proportionalen, Parkbremskraft 20 zugeschaltet werden. Nach Beendigung der Bremsung durch gleichzeitiges Loslassen des BBB 10 und des PBB 8 bleibt die Geschwindigkeit 21 wieder konstant.

Die Erfindung ist nicht beschränkt auf die voranstehenden bevorzugten Ausführungsbeispiele. Es sind vielmehr auch Abwandlungen hiervon denkbar, welche vom Schutzbereich der nachfolgenden Ansprüche mit umfasst sind. So ist es beispielsweise auch möglich, dass bei der Einsteuerung oder bei der Festlegung der Soll-Parkbremskraft ein maximaler Parkbremskraftgradient beachtet wird, so dass keine sprunghaften Änderungen der Parkbremskraft auftreten können, sondern diese durch fließende Übergänge ersetzt werden.

### Bezugszeichenliste

- 1: Fahrzeug
- 2: Zugmaschine
- 3: Anhänger
- 4: Steuereinheit
- 5: Parkbremssystem
- 6: Feststellbremse
- 7: Betriebsbremse des Anhängers
- 8: Parkbremsbetätigungselement (PBB)
- 9: Datenbus
- 10: Betriebsbremsbetätigungselement (BBB)
- 11: Beschleunigungsbetätigungselement
- 12: Schaltzustand
- 13: monostabiler Schaltzustand
- 14: Auslenkungszustand des BBB
- 15: monostabiler Auslenkungszustand des BBB
- 16: monostabiler Auslenkungszustand des Beschleunigungsbetätigungselements
- 17: Anzeigeelement
- 18: maximaler Wert der Parkbremskraft
- 19: Parkbremsen
- 20: Parkbremskraft
- 21: Geschwindigkeit
- 22: PBB-Betätigungszeitpunkt
- 23: PBB-Loslasszeitpunkt
- 24: Testendzeitpunkt
- 25: Testdauer
- 26: BBB-Betätigungszeitpunkt
- 27: BBB-Loslasszeitpunkt
- 28: Stillstandintervall
- 29: Rückfalldauer

## Patentansprüche

1. Verfahren zum Betrieb eines Parkbremssystems (5) eines Fahrzeugs (1), umfassend Verfahrensschritte, bei denen durch eine elektronische Steuereinheit (5) der Schaltzustand (12) eines monostabilen, in mindestens zwei mögliche Schaltzustände (12) schaltbaren, Parkbremsenbetätigungselementes (PBB) (8) registriert wird, und die Geschwindigkeit (21) des Fahrzeugs (1) durch die Steuereinheit (5) registriert wird, und die durch die Parkbremsen (19) des Parkbremssystems (5) erzeugte aktuelle Ist-Parkbremskraft (20) registriert wird, wobei eine Ist-Parkbremskraft (20) von 0 Newton gelösten Parkbremsen (19) und eine maximale Ist-Parkbremskraft (20) angelegten Parkbremsen (19) entspricht, und in Abhängigkeit der Geschwindigkeit (21), der Ist-Parkbremskraft (20) und des Schaltzustandes (12) des PBB (8) eine Soll-Parkbremskraft festgelegt und zur Erzeugung durch die Parkbremsen (19) eingesteuert wird,
**dadurch gekennzeichnet, dass** durch die Steuereinheit (5) der skalare Auslenkungszustand (14) eines monostabilen, in ein kontinuierliches Spektrum möglicher skalarer Auslenkungszustände (14) auslenkbaren, Betriebsbremsenbetätigungselements (BBB) (10) registriert wird, und der Auslenkungszustand (14) des BBB (10) bei der Festlegung der Soll-Parkbremskraft berücksichtigt wird.

2. Verfahren nach Anspruch 1,
**dadurch gekennzeichnet, dass** die Soll-Parkbremskraft durch die Steuereinheit (5) auf deren maximalen Wert (18) festgelegt wird, wenn durch die Steuereinheit die Geschwindigkeit (21) innerhalb eines Stillstandsintervalls (28) und die Ist-Parkbremskraft (20) von 0 Newton und ein instabiler Auslenkungszustand (14) des BBB (10) registriert wird, und währenddessen eine Umschaltung des PBB (10) in einen instabilen Schaltzustand (14) und anschließend eine Umschaltung des PBB (10) in dessen monostabilen Schaltzustand (15) registriert wird.

3. Verfahren nach Anspruch 1,
**dadurch gekennzeichnet, dass** die Soll-Parkbremskraft durch die Steuereinheit (5) auf 0 Newton festgelegt wird, wenn durch die Steuereinheit (5) die Ist-Parkbremskraft (20) oberhalb eines oberen Parkkraftschwellwertes und ein instabiler Auslenkungszustand (14) des BBB (10) registriert wird, und währenddessen eine Umschaltung des PBB (8) in einen instabilen Schaltzustand (12) registriert wird und anschließend eine Umschaltung des PBB (8) in dessen monostabilen Schaltzustand (13) registriert wird.

4. Verfahren nach Anspruch 1,
**dadurch gekennzeichnet, dass** die Soll-Parkbremskraft durch die Steuereinheit (5) auf 0 Newton festgelegt wird, wenn durch die Steuereinheit (5) die Ist-Parkbremskraft (20) oberhalb eines oberen Parkkraftschwellwertes und der monostabile Auslenkungszustand (15) des BBB (10) registriert wird, und die Schaltstellung eines von der Steuereinheit (5) überwachten Getriebebetätigungselements außerhalb von dessen Leerlauf- oder Parkstellung registriert wird, oder ein instabiler Auslenkungszustand eines von der Steuereinheit (5) überwachten monostabilen Beschleunigungsbetätigungselements (11) registriert wird, und währenddessen eine Umschaltung des PBB (8) in einen instabilen Schaltzustand (12) registriert wird und anschließend eine Umschaltung des PBB (8) in dessen monostabilen Schaltzustand (13) registriert wird.

5. Verfahren nach Anspruch 1,
**dadurch gekennzeichnet, dass** die Soll-Parkbremskraft durch die Steuereinheit (5) durch eine monotone Funktion des skalaren Auslenkungszustandes (14) des BBB (10) errechnet wird, während ein instabiler Schaltzustand (12) des PBB registriert wird.

6. Verfahren nach Anspruch 5,
**dadurch gekennzeichnet, dass** die Soll-Parkbremskraft durch die Steuereinheit (5) durch eine lineare Funktion des skalaren Auslenkungszustandes des BBB (10) errechnet wird.

7. Verfahren nach Anspruch 5 oder 6,
**dadurch gekennzeichnet, dass** die Soll-Parkbremskraft durch die Steuereinheit (5) auf 0 Newton festgelegt wird, wenn eine Geschwindigkeit außerhalb eines Stillstandintervalls (28) registriert wird und ein instabiler Auslenkungszustand (14) des BBB (10) registriert wird und währenddessen ein Umschalten des PBB (8) von einem instabilen Schaltzustand (12) in den monostabilen Schaltzustand (13) registriert wird.

8. Verfahren nach Anspruch 1,
**dadurch gekennzeichnet, dass** die Soll-Parkbremskraft durch die Steuereinheit (5) auf deren maximalen Wert (18) festgelegt wird, wenn durch die Steuereinheit (5) die Geschwindigkeit (21) innerhalb eines Stillstandsintervalls (28) und die Ist-Parkbremskraft (20) von 0 Newton registriert wird und der Auslenkungszustand (14) des BBB (10) fehlerhaft registriert wird, und währenddessen über eine festgelegte Rückfalldauer (29) hinweg ein instabiler Schaltzustand (12) des PBB (8) registriert wird.

9. Verfahren nach einem der vorherigen Ansprüche,
**dadurch gekennzeichnet, dass** zur Einsteuerung der Soll-Parkbremskraft eine Feststellbremse (6) des Fahrzeugs (1) angesteuert wird.

10. Verfahren nach einem der vorherigen Ansprüche,
**dadurch gekennzeichnet, dass** zur Einsteuerung der Soll-Parkbremskraft eine Betriebsbremse (7) eines Anhängers (3) des Fahrzeugs (1) angesteuert wird.

11. Verfahren nach Anspruch 10,
**dadurch gekennzeichnet, dass** ein Bremstest durchgeführt wird, indem, wenn durch die Steuereinheit (5) die Geschwindigkeit (21) innerhalb eines Stillstandsintervalls (28) und der monostabile Auslenkungszustand (15) des BBB () und die Ist-Parkbremskraft (20) oberhalb eines oberen Parkkraftschwellwertes und eine Umschaltung des PBB (8) in einen instabilen Schaltzustand (12) registriert wird, die Betriebsbremse (7) des Anhängers (3) zur Erzeugung einer Parkbremskraft von 0 Newton angesteuert wird, und anschließend entweder nach Ablauf einer festgelegten Testdauer (25) oder vorher nach Umschaltung des PBB (8) in dessen monostabilen Schaltzustand (13) die Betriebsbremse (7) des Anhängers (3) mit deren maximaler Soll-Parkbremskraft angesteuert wird.

12. Verfahren nach einem der vorherigen Ansprüche,
**dadurch gekennzeichnet, dass** die Steuereinheit (5) aus einem Bereitschaftsmodus in einen Betriebsmodus gewechselt wird, wenn ein Umschalten von dem monostabilen Schaltzustand (13) in einen instabilen Schaltzustand (12) des PBB registriert wird.

13. Verfahren nach einem der vorherigen Ansprüche,
**dadurch gekennzeichnet, dass** der Auslenkungszustand (14) des BBB (10) durch eine Positionssensorik am BBB (10) oder durch eine Drucksensorik in einem Druckreservoir des Betriebsbremssystems ermittelt wird.

14. Parkbremssystem (5) eines Fahrzeugs (1), umfassend eine elektronische Steuereinheit (5) zur Regelung der Ist-Parkbremskraft (20), Mittel zur Registrierung der Geschwindigkeit (21) des Fahrzeugs (1) durch die Steuereinheit (5), ein monostabiles, in mindestens zwei durch die Steuereinheit (5) registrierbare Schaltzustände (12) schaltbares, Parkbremsenbetätigungselement (PBB) (8), eine durch die Steuereinheit (5) ansteuerbare Parkbremse (19) in Form einer Feststellbremse (6) zur Erzeugung der Ist-Parkbremskraft (20),
**dadurch gekennzeichnet, dass** die Steuereinheit (5) den Auslenkungszustand (14) eines monostabilen, in ein kontinuierliches Spektrum möglicher skalarer Auslenkungszustände (14) auslenkbaren, Betriebsbremsenbetätigungselements (BBB) (10) registriert und über Rechenanweisungen verfügt, um ein Verfahren nach den Ansprüchen 1 bis 13 durchzuführen.

15. Parkbremssystem (5) nach Anspruch 14,
**dadurch gekennzeichnet, dass** genau ein instabiler Schaltzustand (12) des PBB (8) existiert, bei dem zwei im monostabilen Schaltzustand (13) elektrisch verbundene Kontakte elektrisch getrennt sind, und die Kontakte direkt oder über ein Steuergerät und einen Datenbus (9) mit der Steuereinheit (5) verbunden sind.

16. Parkbremssystem (5) nach einem der Ansprüche 14 oder 15,
**dadurch gekennzeichnet, dass** das BBB (10) über einen Positionssensor verfügt welcher direkt oder über ein Steuergerät und einen Datenbus (9) mit der Steuereinheit (5) verbunden ist.

17. Parkbremssystem (5) nach einem der Ansprüche 14 bis 16,
**dadurch gekennzeichnet, dass** ein optisches Anzeigeelement (17) auf dem PBB (8) vorgesehen ist, zur Anzeige der Ist-Parkbremskraft (20).

18. Fahrzeug (1), umfassend ein Parkbremssystem (5) nach einem der Ansprüche 14 bis 17.

19. Fahrzeug (1) nach Anspruch 18, umfassend einen Anschluss für einen Anhänger (3) mit einer dem Parkbremssystem (5) zugehörigen Parkbremse (19) in Form einer Betriebsbremse (7).

20. Fahrzeug nach Anspruch 19, umfassend einen Anhänger (3) mit einer dem Parkbremssystem (5) zugehörigen Parkbremse (19) in Form einer Betriebsbremse (7).

## Claims

1. Method for operating a parking brake system (5) of a vehicle (1), comprising steps in which the switching state (12) of a monostable parking brake actuating element (PBB) (8), which can be switched into at least two switching states (12), is recorded by an electronic control unit (5) and the speed (21) of the vehicle (1) is recorded by the electronic control unit (5) and the current actual parking brake force (20) generated by the parking brakes (19) of the parking brake system (5) is recorded, wherein an actual parking brake force (20) of 0 Newton corresponds to released parking brakes (19) and a maximum actual parking brake force (20) corresponds to applied parking brakes (19), and wherein a target parking brake force is set as a function of the speed (21), the actual parking brake force (20) and the switching state (12) of the PBB (8) and input for generation by the parking brakes (19),
**characterised in that** the scalar deflection state (14) of a monostable service brake actuating element (BBB) (10) deflectable to a continuous spectrum of possible scalar deflection states (14) is recorded by the electronic control unit (5) and the deflection state (14) of the BBB (10) is taken into account when setting the target parking brake force.

2. Method according to claim 1,
**characterised in that** the target parking brake force is set to its maximum value (18) by the control unit (5) if the control unit records the speed (21) to be within a standstill interval (28) and the actual parking brake force (20) of 0 Newton and an unstable deflection state (14) of the BBB (10) and if in the meantime a switching of the BBB (10) into an unstable switching state (14) and then a switching of the BBB (10) into its monostable switching state (15) is recorded.

3. Method according to claim 1,
**characterised in that** the target parking brake force is set to 0 Newton by the control unit (5) if the control unit (5) records the actual parking brake force (20) to lie above an upper parking brake force threshold value and an unstable deflection state (14) of the BBB (10) and if in the meantime a switching of the PBB (8) into an unstable switching state (12) and then a switching of the PBB (8) into its monostable switching state (13) is recorded.

4. Method according to claim 1,
**characterised in that** the target parking brake force is set to 0 Newton by the control unit (5) if the control unit (5) records the actual parking brake force (20) to lie above an upper parking brake force threshold value and a monostable deflection state (15) of the BBB (10), and if the switching position of a gearbox actuating element monitored by the control unit (5) is recorded to lie outside its idling or parking position, or if an unstable deflection state of an acceleration actuating element (11) monitored by the control unit (5) is recorded and if in the meantime a switching of the PBB (8) into an unstable switching state (12) and then a switching of the PBB (8) into its monostable switching state (13) is recorded.

5. Method according to claim 1,
**characterised in that** the target parking brake force is calculated by the control unit (5) by way of a monotone function of the scalar deflection state (14) of the BBB (10) while an unstable switching state (12) of the PBB is recorded.

6. Method according to claim 5,
**characterised in that** the target parking brake force is calculated by the control unit (5) by way of a linear function of the scalar deflection state of the BBB (10).

7. Method according to claim 5 or 6,
**characterised in that** the target parking brake force is set by the control unit (5) to 0 Newton if a speed outside a standstill interval (28) is recorded and an unstable switching state (14) of the BBB (10) is recorded and if in the meantime a switching of the PBB (8) into from an unstable switching state (12) into the monostable switching state (13) is recorded.

8. Method according to claim 1,
**characterised in that** the target parking brake force is set by the control unit (5) to its maximum value if the control unit (5) records the speed (21) to lie within a standstill interval (28) and the actual parking brake force (20) of 0 Newton and the deflection state (14) of the BBB (10) is recorded erroneously and if in the meantime an unstable switching state (12) of the PBB (8) is recorded beyond a defined reversion duration (29).

9. Method according to any of the preceding claims,
**characterised in that** a parking brake (6) of the vehicle (1) is activated for inputting the target braking force.

10. Method according to any of the preceding claims,
**characterised in that** a service brake (7) of a trailer (3) of the vehicle (1) is activated for inputting the target braking force.

11. Method according to claim 10,
**characterised in that** a brake test is performed by providing that, if the control unit (5) records the speed (21) to lie within a standstill interval (28) and the monostable deflection state (15) of the BBB () and the actual parking brake force (20) above an upper parking brake force threshold value and a switching of the PBB (8) into an unstable switching state (12), the service brake (7) of the trailer (3) is activated to generate a parking brake force of 0 Newton and the service brake (7) of the trailer (3) is then activated with its maximum target parking brake force either on the expiry of a fixed test duration or earlier following the switching of the PBB (8) into its monostable switching state (13).

12. Method according to any of the preceding claims,
**characterised in that** the control unit (5) is switched from a standby mode to an operating mode if a switchover from the monostable switching state (13) into an unstable switching state (12) of the PBB is recorded.

13. Method according to any of the preceding claims,
**characterised in that** the deflection state (14) of the BBB (10) is determined by a position sensor system at the BBB (10) or by a pressure sensor system in a pressure reservoir of the service brake system.

14. Parking brake system (5) of a vehicle (1), comprising an electronic control unit (5) for controlling the actual parking brake force (20), means for recording the speed (21) of the vehicle (1) by the control unit (5), a monostable parking brake actuating element (PBB) (8) switchable into at least two switching states (12), which can be recorded by the control unit (5), a parking brake (19) actuable by the control unit (5) in the form of a parking brake (6) for the generation of the actual parking brake force (20),
**characterised in that** the control unit (5) records the deflection state (14) of a monostable service brake actuating element (BBB) (10) deflectable to a continuous spectrum of possible scalar deflection states (14) and has calculating instructions for carrying out a method according to any of claims 1 to 13.

15. Parking brake system (5) according to claim 14,
**characterised in that** precisely one unstable switching state (12) of the PBB (8) exists, in which two contacts which are electrically connected in the monostable switching state (13) are electrically disconnected, and **in that** the contacts are connected to the control unit (5) either directly or via a control device and a data bus (9).

16. Parking brake system (5) according to claim 14 or 15,
**characterised in that** the BBB (10) has a position sensor connected to the control unit (5) either directly or via a control device and a data bus (9).

17. Parking brake system (5) according to any of claims 14 to 16,
**characterised in that** a visual display element (17) is provided on the PBB (8) for indicating the actual parking brake force (20).

18. Vehicle (1), comprising a parking brake system (5) according to any of claims 14 to 17.

19. Vehicle (1) according to claim 18, comprising a connection for a trailer (3) with a parking brake (19) belonging to the parking brake system (5) in the form of a service brake (7).

20. Vehicle according to claim 19, comprising a trailer (3) with a parking brake (19) belonging to the parking brake system (5) in the form of a service brake (7).

## Revendications

1. Procédé pour faire fonctionner un système (5) de frein de stationnement d'un véhicule (1), comprenant des stades de procédé dans lesquels, par une unité (5) électronique de commande, on enregistre l'état (12) de commutation d'un élément (PBB) (8) d'actionnement de frein de stationnement monostable et commutable dans au moins deux états (12) de commutation possibles et on enregistre la vitesse (21) du véhicule (1) par l'unité (5) de commande et on enregistre la force (20) de frein de stationnement réelle instantanée produite par les freins (19) de stationnement du système (5) de frein de stationnement, dans lequel une force (20) de frein de stationnement réelle de 0 Newton correspond à des freins (19) de stationnement desserrés et une force (20) de frein de stationnement réelle maximum à des freins (19) de stationnement serrés et, en fonction de la vitesse (21), de la force (20) de frein de stationnement réelle et de l'état (12) de commutation du PBB (8), on fixe une force de frein de stationnement de consigne et on l'entre pour qu'elle soit produite par les freins (19) de stationnement,
**caractérisé en ce que**, par l'unité (5) de commande, on enregistre l'état (14) de déviation d'un élément (BBB) (10) d'actionnement de frein de service monostable pouvant dévier dans un spectre continu d'états (14) de déviation scalaire possibles et on tient compte de l'état (14) de déviation du (BBB) (10) lors de la fixation de la force de frein de stationnement de consigne.

2. Procédé suivant la revendication 1,
**caractérisé en ce que** l'on fixe la force de frein de stationnement de consigne par l'unité (5) de commande à sa valeur (18) maximum, si l'on enregistre, par l'unité de commande, la vitesse (21) dans un intervalle (28) d'arrêt et la force (20) de frein de stationnement réelle de 0 Newton et un état (14) de déviation instable du BBB (10) et, pendant cela, on enregistre une commutation du PBB (10) dans un état (14) de commutation instable et, ensuite, une commutation du PBB (10) dans son état (15) de commutation monostable.

3. Procédé suivant la revendication 1,
**caractérisé en ce que** l'on fixe la force de frein de stationnement de consigne par l'unité (5) de commande à 0 Newton si l'on enregistre, par l'unité (5) de commande, la force (20) de frein de stationnement réelle au-dessus d'une valeur de seuil supérieure de frein de stationnement et un état (14) de déviation instable du BBB (10) et, pendant cela, on enregistre une commutation du PBB (8) dans un état (12) de commutation instable, et on enregistre, ensuite, une commutation du PBB (8) dans son état (13) de commutation monostable.

4. Procédé suivant la revendication 1,
**caractérisé en ce que** l'on fixe la force du frein de stationnement de consigne par l'unité (5) de commande à 0 Newton si l'on enregistre, par l'unité (5) de commande, la force (20) de frein de stationnement réelle au-dessus d'une valeur de seuil supérieure de force de stationnement et l'état (15) de déviation monostable du BBB (10) et on enregistre la position de commutation d'un élément d'actionnement de la boîte de vitesse contrôlée par l'unité (5) de commande, en dehors de sa position de ralenti ou de stationnement, ou on enregistre un état de déviation instable d'un élément (11) d'actionnement d'accélération monostable contrôlé par l'unité (5) de commande et, pendant ce temps, on enregistre une commutation du PBB (8) dans un état (12) de commutation instable et, ensuite, on enregistre une commutation du PBB (8) dans son état (13) de commutation monostable.

5. Procédé suivant la revendication 1,
**caractérisé en ce que** l'on calcule la force de frein de stationnement de consigne par l'unité (5) de commande par une fonction monotone de l'état (14) de déviation scalaire du BBB (10) pendant que l'on enregistre un état (12) de commutation instable du PBB.

6. Procédé suivant la revendication 5,
**caractérisé en ce que** l'on calcule la force de frein de stationnement de consigne par l'unité (5) de commande par une fonction linéaire de l'état de déviation scalaire du BBB (10).

7. Procédé suivant la revendication 5 ou 6,
**caractérisé en ce que** l'on fixe la force de frein de stationnement de consigne par l'unité (5) de commande à 0 Newton si l'on enregistre une vitesse en dehors d'un intervalle (28) d'arrêt et on enregistre un état (14) de déviation instable du BBB (10) et, pendant ce temps, on enregistre une commutation du PBB (8) d'un état (12) de commutation instable à l'état (13) de commutation monostable.

8. Procédé suivant la revendication 1,
**caractérisé en ce que** l'on fixe la force de frein de stationnement de consigne par l'unité (5) de commande à sa valeur (18) maximum si, par l'unité (5) de commande, l'on enregistre la vitesse (21) dans un intervalle (28) d'arrêt et la force (20) de frein de stationnement réelle de 0 Newton et on enregistre, de manière défectueuse, l'état (14) de déviation du BBB (10) et, pendant ce temps, on enregistre, sur une durée (29) de retombée, un état (12) de commutation instable du PBB (8).

9. Procédé suivant l'une des revendications précédentes,
**caractérisé en ce que**, pour entrer la force de frein de stationnement de consigne, on commande un frein (6) de stationnement du véhicule (1).

10. Procédé suivant l'une des revendications précédentes,
**caractérisé en ce que**, pour entrer la force de frein de stationnement de consigne, on commande un frein (7) de service d'une remorque (3) du véhicule (1).

11. Procédé suivant la revendication 10
**caractérisé en ce que** l'on effectue un test de freinage par le fait que s'il est enregistré, par l'unité (5) de commande, la vitesse (21) dans un intervalle (28) d'arrêt et l'état (15) de déviation monostable du BBB () et la force (20) de frein de stationnement réelle au-dessus d'une valeur de seuil supérieure de frein de stationnement et une commutation du PBB (8) à une état (12) de commutation instable, on commande le frein (7) de service de la remorque (3) pour produire une force de frein de stationnement de 0 Newton et, ensuite, soit après écoulement d'une durée (25) de test fixée, soit auparavant, après commutation du PBB (8) dans son état (13) de commutation monostable, on commande le frein (7) de service de la remorque (3) par sa valeur de frein de stationnement de consigne maximum.

12. Procédé suivant l'une des revendications précédentes,
**caractérisé en ce que** l'on fait passer l'unité (5) de commande d'un mode de disponibilité à un mode de service si l'on enregistre une commutation de l'état (13) de commutation monostable à un état (12) de commutation instable du PBB.

13. Procédé suivant l'une des revendications précédentes,
**caractérisé en ce que** l'on détermine l'état (14) de déviation du BBB (10) par un système de détermination de position du BBB (10) ou par un système de détermination de la pression dans un réservoir de pression du système de frein de service.

14. Système (5) de frein de stationnement d'un véhicule (1), comprenant une unité (5) électronique de commande pour réguler la force (20) de frein de stationnement réelle, des moyens d'enregistrement de la vitesse (21) du véhicule (1) par l'unité (5) de commande, un élément (PBB) (8) d'actionnement de frein de stationnement monostable et pouvant être commuté dans au moins deux états (12) de commutation enregistrables par l'unité (5) de commande, un frein (19) de stationnement pouvant être commandé par l'unité (5) de commande, sous la forme d'un frein (6) d'arrêt pour produire la force (20) de frein de stationnement réelle,
**caractérisé en ce que** l'unité (5) de commande enregistre l'état (14) de déviation d'un élément (BBB) (10) d'actionnement de frein de service monostable et pouvant être dévié dans un spectre continu d'états (14) de déviation scalaire possibles et dispose d'instructions de calcul pour effectuer un procédé suivant les revendications 1 à 13.

15. Système (5) de frein de stationnement suivant la revendication 14,
**caractérisé en ce qu'**il existe exactement un état (12) de commutation instable du PBB (8), dans lequel deux contacts, reliés électriquement dans l'état (13) de commutation monostable, sont séparés et les contacts sont reliés directement, ou par l'intermédiaire d'un appareil de commande et d'un bus (9) de données, à l'unité (5) de commande.

16. Système (5) suivant l'une des revendications 14 ou 15,
**caractérisé en ce que** le BBB (10) dispose d'un capteur de position relié directement, ou par l'intermédiaire d'un appareil de commande et d'un bus (9) de données, à l'unité (5) de commande.

17. Système (5) suivant l'une des revendications 14 à 16,
**caractérisé en ce qu'**il est prévu un élément (17) d'affichage optique sur le PBB (8) pour afficher la force (20) de frein de stationnement réelle.

18. Véhicule (1), comprenant un système (5) de frein de stationnement suivant l'une des revendications 14 à 17.

19. Véhicule (1) suivant la revendication 18, comprenant un attelage pour une remorque (3) ayant, sous la forme d'un frein (7) de service, un frein (19) de stationnement associé au système de frein (5) de stationnement.

20. Véhicule suivant la revendication 19, comprenant une remorque (3) ayant, sous la forme d'un frein (7) de service, un frein (19) de stationnement associé au système (5) de frein de stationnement.
